# FASCICULE DE BREVET EUROPEEN

(11) **EP 0 382 604 B1**
(45) Date de publication et mention de la délivrance du brevet: **15.09.1993**
(21) Numéro de dépôt: 90400277.1
(22) Date de dépôt: 02.02.1990
(51) Int. Cl.: B64D 13/00

(54) **Système pour la ventilation d'un aéronef**
Belüftungssystem für Flugzeuge
Aircraft ventilation system

(30) Priorité: 06.02.1989 FR 8901483
(43) Date de publication de la demande: 16.08.1990
(73) Titulaire: AEROSPATIALE Société Nationale Industrielle, 75781 Paris Cédex 16 (FR)
(72) Inventeur: Lamarque, Etienne, F-31270 Cugnaux (FR); Lascours, Pierre, F-31270 Cugnaux (FR)
(74) Mandataire: Bonnetat, Christian

(56) Documents cités:
- EP-A- 0 035 909
- FR-A- 852 127
- US-A- 2 100 834
- US-A- 2 297 495
- US-A- 4 742 761

## Description

La présente invention concerne un système pour la ventilation de l'intérieur d'un aéronef.

On sait qu'un système pour la ventilation de l'intérieur d'un aéronef comporte essentiellement des moyens d'alimentation en air sous pression, prélevant de l'air neuf à l'extérieur dudit aéronef pour l'introduire à l'intérieur de celui-ci, et des moyens d'extraction pour rejeter à l'extérieur l'air vicié. Lesdits moyens d'alimentation sont généralement constitués par un compresseur, entraîné par le(s) moteur(s) de l'aéronef et associé à un dispositif de conditionnement d'air. Quant à eux, lesdits moyens d'extraction mettent à profit la différence de pression existant entre l'intérieur et l'extérieur de l'aéronef et comportent des vannes de contrôle de pression. Ces moyens d'extraction peuvent également comprendre une turbine. Dans ce cas, comme cela est indiqué dans les documents US-A-2 297 495 et US-A-2 767 561, il est avantageux, afin d'aider le moteur d'entraînement du compresseur d'alimentation, de coupler mécaniquement ladite turbine et ledit compresseur. Ainsi, on récupère une partie de l'énergie de l'air vicié, au moment de son extraction.

Notamment lorsque l'aéronef est de grande dimension et que son intérieur est subdivisé en une pluralité de compartiments, de tels moyens d'alimentation et d'extraction ne sont pas suffisants, à eux seuls, pour assurer une ventilation correcte de l'intérieur de l'aéronef. Il est alors nécessaire de prévoir des moyens permettant la circulation de l'air à l'intérieur dudit aéronef.

Dans les avions modernes, tels que les AIRBUS A 310 et A 320 ou les BOEING 727, 747, 757 et 767 par exemple, ces moyens de circulation d'air comportent un réseau de gaines de ventilation et une pluralité de ventilateurs électriques, dont certains d'entre eux soufflent, et les autres aspirent, de l'air dans lesdites gaines. Il va de soi qu'une telle pluralité de ventilateurs électriques présentent des inconvénients en ce qui concerne la masse, les coûts de fabrication et la complexité du câblage et de commande. De plus, cette pluralité de ventilateurs est source de bruits importants.

La présente invention a pour objet de remédier à ces inconvénients.

A cette fin, selon l'invention, le système pour la ventilation d'un aéronef, dont l'intérieur est subdivisé en une pluralité de compartiments disposés de part et d'autre d'un plancher longitudinal, ledit système comportant des moyens d'alimentation en air neuf, des moyens d'extraction de l'air vicié et des moyens de circulation d'air à l'intérieur dudit aéronef comprenant des ventilateurs de soufflage et d'aspiration d'air associés à un réseau de gaines de soufflage et d'aspiration entre lesdits compartiments, des communications étant prévues entre au moins certains desdits compartiments qui sont voisins, est caractérisé en ce que :
- lesdits moyens de circulation sont constitués par un ensemble de soufflage et de ventilation comportant un ventilateur de soufflage et un ventilateur d'aspiration, montés sur un arbre commun et entraînés par un moteur électrique commun ;
- ledit ensemble de soufflage et de ventilation est disposé dans un compartiment se trouvant sous ledit plancher ;
- ledit ventilateur électrique de soufflage aspire l'air ambiant dans un compartiment se trouvant sous ledit plancher ;
- un mélangeur d'air unique reçoit de l'air neuf desdits moyens d'alimentation et de l'air intérieur dudit ventilateur de soufflage et distribue l'air mélangé au moins dans certains desdits compartiments disposés au-dessus dudit plancher ; et
- l'entrée dudit ventilateur électrique d'aspiration est reliée à au moins certains desdits compartiments et la sortie dudit ventilateur d'aspiration débouche au voisinage d'une vanne d'extraction d'air permettant de contrôler la pression dans ledit aéronef.

Ainsi, on obtient un système de ventilation centralisé, permettant d'éviter les inconvénients précités.

On remarquera que le document US-A-2 100 834 décrit un wagon non compartimenté, pourvu de deux ventilateurs entraînés par un seul moteur.

Pour des raisons d'encombrement, notamment, il est préférable que ledit mélangeur d'air unique soit disposé dans un compartiment se trouvant sous ledit plancher. On renforce alors le caractère centralisé du système selon l'invention.

Par ailleurs, au moins un compartiment peut recevoir directement l'air provenant dudit ventilateur électrique de soufflage, sans passage à travers ledit mélangeur d'air. Dans ce cas, pour permettre la ventilation de ce compartiment lors d'une panne de ventilation, le système selon l'invention comporte une liaison commandable entre lesdits moyens d'alimentation en air neuf et ledit compartiment recevant directement l'air dudit ventilateur de soufflage.

Pour la ventilation au sol, on prévoit que la sortie dudit ventilateur électrique d'aspiration est reliée par une liaison commandable à un orifice de grand diamètre traversant le fuselage dudit aéronef.

De même, pour assurer une certaine extraction d'air en cas de panne, il est prévu que le sortie dudit ventilateur électrique d'aspiration est reliée par une liaison commandable à un orifice de petit diamètre traversant le fuselage dudit aéronef.

Les figures du dessin annexé feront bien comprendre comment l'invention peut être réalisée. Sur ces figures, des références identiques désignent des éléments semblables.

La figure 1 illustre, schématiquement, un système de ventilation connu pour aéronef.

La figure 2 montre un mode de réalisation schématique du système de ventilation conforme à la présente invention.

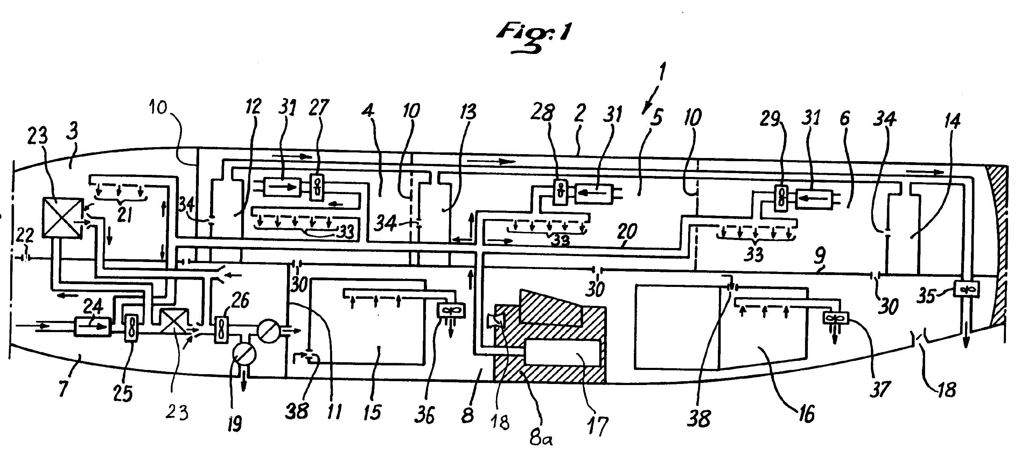

L'avion gros porteur 1, de type connu, représenté schématiquement et partiellement sur la figure 1, comporte, à l'intérieur de son fuselage 2, une pluralité de compartiments principaux 3 à 8, séparés les uns des autres par le plancher 9 et des cloisons transversales 10 ou 11. Ces compartiments principaux constituent le poste de pilotage 3, la cabine avant 4, la cabine centrale 5, la cabine arrière 6, la soute électronique 7 et la soute principale 8. Par ailleurs, à l'intérieur des compartiments principaux 4, 5 et 6 sont agencés des compartiments secondaires 12, 13 et 14 formant les toilettes et la cuisine, tandis que dans la soute principale 8 sont agencées les soutes marchandes avant 15 et arrière 16.

Sur cette figure 1, on a représenté schématiquement un système de ventilation connu comportant des moyens d'alimentation en air neuf, disposés dans la zone 8a (non pressurisée) et prélevant de l'air chaud sur les moteurs de l'avion 1 (non représentés) et comportant un dispositif de conditionnement d'air 17, des moyens d'extraction d'air vicié, constitués de vannes 18 d'extraction d'air permettant de contrôler la pression dans le fuselage 2 et de vannes 19, et des moyens de circulation d'air comprenant un réseau de gaines 20 reliées à une pluralité de ventilateurs électriques 25 à 29 et 35 à 37, disposés dans certains desdits compartiments et soufflant ou aspirant de l'air dans le réseau des gaines 20.

Comme cela est illustré sur la figure 1 :
a) le poste de pilotage 3 est alimenté par de l'air neuf provenant du dispositif de conditionnement d'air 17. La pression nécessaire pour faire circuler l'air dans les gaines d'alimentation 20 associées est directement engendrée par les moteurs de l'avion à travers ledit dispositif de conditionnement d'air.
   L'air soufflé en plusieurs points 21 du poste de pilotage est évacué dans la soute électronique 7 sous le plancher du poste 3 par des orifices 22 percés dans le plancher 9. La ventilation des équipements 23 installés dans le poste de pilotage 3 et en soute électronique 7 et dissipant de la chaleur (planches de bord par exemple) est effectuée de la façon suivante :
   - l'air nécessaire au refroidissement desdits équipements électriques et électroniques 23 est un mélange d'air neuf et d'air ambiant prélevé dans la soute avant pressurisée 7 disposée sous le plancher 9. Cet air ambiant est filtré (en 24) et pulsé dans les équipements par un ou plusieurs ventilateurs électriques 25 associés au réseau de gaines 20. En cas de panne de ventilateur, le débit d'air neuf continue à garantir une ventilation minimum.
   - L'air de ventilation soufflé dans les équipements 23 est aspiré par le réseau de gaines 20 au moyen d'un autre ventilateur électrique 26. Il est rejeté dans la soute pressurisée 8 et guidé vers la vanne 18 du système de contrôle de pression dans la cabine, située en zone avant du fuselage qui l'évacue à l'extérieur de l'avion à travers la zone 8a.
   - En cas de panne du ventilateur 26, l'air est extrait en vol par différence de pression entre le volume pressurisé et l'extérieur de l'avion en ouvrant la vanne, dans sa fonction secours 19, mettant en communication le circuit d'extraction et l'ambiance extérieur de l'avion.
b) Le renouvellement de l'air de chaque cabine de passagers 4, 5 ou 6 doit maintenir une température confortable et garantir une quantité d'air neuf suffisante pour la respiration des passagers. L'air fourni est un mélange d'air neuf et d'air de cabine, recirculé par des ventilateurs électriques 27, 28 et 29, à travers des filtres 31. Ce mélange d'air est introduit par des orifices 33 des gaines 20. Une partie de l'air correspondant au débit d'air neuf est évacué sous le plancher de cabine à travers des orifices 30 percés dans le plancher 9, par différence de pression (de l'ordre de quelques pascals) provoquée par l'évacuation à l'extérieur de l'avion de l'air ambiant par les vannes 18 du système de contrôle de pression de cabine. Dans le cas de panne des ventilateurs de recirculation d'air de cabine, le débit d'air neuf du dispositif de conditionnement 17 assure une ventilation minimale de ces zones.
c) L'évacuation des odeurs et des charges calorifiques produites dans les toilettes et cuisines 12, 13 et 14, s'effectue par renouvellement permanent d'air. De l'air, provenant des cabines passagers par des orifices 34 est aspiré à l'intérieur des toilettes et cuisines par un circuit comprenant un ventilateur 35 et des gaines 20 le reliant directement à l'extérieur de l'avion. Le ventilateur 35 ne fonctionne que lorsque la pression différentielle cabine/extérieur est trop faible pour provoquer l'extraction du débit d'air nécessaire.
   Sur certains types d'avion, tels que l'AIRBUS A 320 ne comportant pas d'orifice spécifique extérieur, donc pas de dispositif d'extraction par différence de pression avec l'extérieur, le fonctionnement permanent du ventilateur 35 est nécessaire. L'air vicié est alors rejeté à proximité de la vanne 18 de régulation de pression de cabine dans le volume pressurisé.
d) Lorsqu'une ventilation des soutes marchandes 15 et 16 est nécessaire, des ventilateurs électriques 36, 37 extraient l'air desdites soutes provoquant une légère dépression par rapport à la pression ambiante dans la soute 8. L'air ambiant de celle-ci pénètre dans les soutes 15 et 16 par des orifices appropriés 38 et est généralement rejeté dans la soute 8, à proximité des vannes de contrôle de pression de cabine 18.
   En cas de panne des ventilateurs 36, 37, la ventilation des soutes 15 et 16 n'est pas possible.

De la description succincte qui vient d'être faite de la technique antérieure, on voit que la ventilation d'un aéronef gros porteur nécessite presque autant de ventilateurs 25, 26, 27, 28, 29, 35, 36 et 37 qu'il existe de compartiments principaux ou secondaires 3, 4, 5, 6, 7, 8, 12, 13, 14, 15, 16 à ventiler.

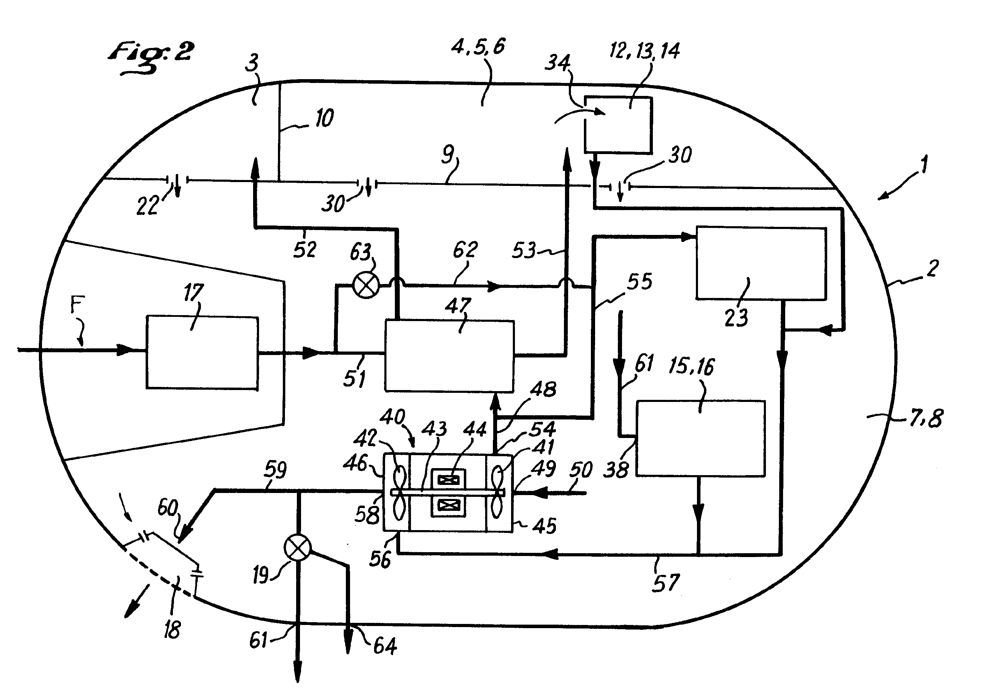

La présente invention a pour objet de remédier à cet inconvénient, comme cela est illustré sur la figure 2.

Sur la figure 2, pour bien faire ressortir l'originalité de la présente invention, on a schématisé à l'extrême l'intérieur de l'avion 1. Sur cette figure, on retrouve la plupart des éléments de structure montrés par la figure 1, à savoir le fuselage 2 ; le poste de pilotage 3 ; les cabines de passagers 4, 5, 6 ; les soutes 7, 8 ; le plancher 9 ; les cloisons 10 ; les toilettes et cuisines 12, 13, 14 ; les soutes marchandes 15, 16 ; le dispositif de conditionnement d'air 17 ; les vannes d'extraction d'air 18 ; les vannes 19 utilisées en mode secours en cas de panne ; les orifices 22 faisant communiquer le poste de pilotage 3 avec les soutes 7, 8; les équipements électriques et électroniques 23 ; les orifices 30 faisant communiquer les cabines de passagers 4, 5, 6 avec les soutes 7, 8 ; les orifices 34 faisant communiquer les toilettes et cuisines 12, 13, 14 avec les cabines de passagers 4, 5, 6 et les orifices 38 de communication entre les soutes 7, 8 et les soutes marchandes 15, 16.

Toutefois, sur cette figure 2, à des fins de simplification, on a représenté une seule des cabines de passagers 4, 5 et 6 (et donc une seule cloison 10) et un seul des compartiments 12, 13, 14 à usage de toilettes ou de cuisines. De plus, la cloison 11 a été supprimée et les deux soutes 7 et 8, ont été considérées comme un seul espace de soute 7, 8. Enfin, les équipements 23 ont été représentés seulement dans l'espace de soute 7, 8 bien qu'ils existent aussi dans le poste de pilotage 3.

Le système de ventilation, conforme à la présente invention et représenté par la figure 2, comporte, disposé dans l'espace de soute 7, 8, un ensemble de soufflage-aspiration 40 comprenant un ventilateur de soufflage 41 et un ventilateur d'aspiration 42, montés sur un arbre commun 43 entraîné par un moteur 44. Les ventilateurs 41 et 42 sont enfermés dans des carters respectifs 45 et 46.

De plus, également dans l'espace de soute 7, 8, le système selon l'invention comporte un mélangeur d'air unique 47, recevant, d'une part, de l'air aspiré dans l'espace 7, 8 par le ventilateur de soufflage 41 à travers l'orifice approprié 49 de son carter (flèche 50) et soufflé à travers son orifice de sortie 54 (flèche 48), et, d'autre part, de l'air neuf sous pression provenant du dispositif de conditionnement d'air 17 (liaison 51). Sur la figure 2, on a schématisé, par une flèche F, l'alimentation du dispositif de conditionnement d'air 17 en air chaud sous pression par les moteurs de l'avion. Ainsi, le mélangeur d'air 47 peut adresser au poste de pilotage 3 et aux cabines 4, 5 et 6 de l'air de ventilation, respectivement par les liaisons 52 et 53. L'air de ventilation en excès dans le poste de pilotage 3 et dans les cabines 4, 5 et 6 retourne à l'espace de soute 7, 8, respectivement à travers les orifices 22 et 30 prévus à cet effet dans le plancher 9. Par ailleurs, la sortie 54 du ventilateur de soufflage 41 est reliée aux équipements électriques et électroniques 23 (liaison 55).

L'entrée 56 du ventilateur d'aspiration 42 est reliée, par une liaison 57, à la fois aux compartiments 12, 13, 14, aux équipements électriques et électroniques 23 et aux soutes marchandes 15, 16. La sortie 58 dudit ventilateur d'aspiration 42 est prolongée par une liaison 59, débouchant (en 60) au voisinage de la vanne d'extraction 18.

Ainsi, les compartiments 12, 13, 14, 15, 16 et les équipements 23 sont mis en dépression, de sorte que :
- de l'air de conditionnement se trouvant dans les cabines 4, 5 et 6 est aspiré, depuis celles-ci, dans les compartiments 12, 13, 14, à travers les orifices 34 ;
- de l'air se trouvant dans le volume de soute 7, 8 est aspiré (flèche 61), depuis celui-ci, dans les soutes marchandes 15, 16 à travers les orifices 38 ;
- la circulation de l'air soufflé par le ventilateur 41, par la liaison 55, dans les équipements 23 est favorisée.

Bien entendu, au moins une partie des liaisons 51, 52, 53, 55, 57 et 59 est formée par des gaines de soufflage ou d'aspiration semblables aux gaines 20 de la figure 1.

On voit ainsi que, grâce à l'invention, on obtient un système de ventilation centralisé, puisque la ventilation est obtenue par un seul équipement électrique 40 à double flux, à savoir un flux de soufflage et un flux d'aspiration.

Au sol, lorsque le dispositif de conditionnement d'air 17 n'est pas en fonctionnement, l'air est extrait des différents compartiments par la liaison 57 et le ventilateur 42 . Il est évacué à l'extérieur par une vanne 19, commandant un grand orifice d'évacuation 61. En effet, dans ce cas, la différence de pression entre l'intérieur et l'extérieur de l'aéronef 1 est faible, sinon nulle, de sorte que les vannes d'extraction 18 ne peuvent extraire de débit d'air.

Dans le cas où l'ensemble de soufflage-aspiration 40 ne peut fonctionner pour raison de panne :
- les compartiments 3, 4, 5, 6 sont ventilés par le seul dispositif de conditionnement d'air 17, à travers le mélangeur 47, respectivement grâce aux liaisons 52 et 53 ;
- les équipements 23 sont ventilés par le seul dispositif de conditionnement d'air 17, à travers une liaison 62 commandée par une vanne 63, court-circuitant le mélangeur 47 ;
- les débits d'air de soufflage causés par le seul dispositif de conditionnement d'air 17 sont suffisants pour permettre la poursuite d'une mission en cours ;
- l'évacuation en vol de l'air vicié amené par la liaison 57 à la sortie 58 du ventilateur d'aspiration 42 est effectuée par l'intermédiaire d'un orifice de petit diamètre 64, commandé par la vanne 19. Ainsi, on est sûr que l'air vicié est évacué, même si les moyens d'extraction sont en panne.

On remarquera que la vanne 18 peut permettre de récupérer, sous forme de poussée pour l'aéronef 1, une partie de l'énergie de l'air vicié évacué à travers elle.

Ainsi, le système selon l'invention permet :
a) La réduction du nombre de ventilateurs à installer d'où :
   - un gain de masse,
   - une simplification des circuits d'installation (supports - câblage électrique - commandes),
   - une diminution des coûts.
b) La réduction du niveau de bruit dans la cabine des passagers et dans le poste de pilotage en installant les ventilateurs sous le plancher des soutes, donc dans une zone éloignée des zones occupées par les passagers ou l'équipage.
c) Le maintien d'un niveau de ventilation de tous les compartiments en cas de panne du ventilateur à double flux.
d) une bonne étanchéité de la cabine, nécessaire dans le cas de panne des groupes de conditionnement d'air car le nombre de passages d'air à travers elle est limité. L'air évacué à l'extérieur peut donc être limité aux fuites structurales.
e) L'optimisation de la récupération de poussée par la vanne 18 du système de contrôle de pression de cabine, d'où une économie de carburant importante, car le débit d'air à travers la vanne peut atteindre des valeurs maximales ; en effet, il n'y a aucun débit d'air de ventilation rejeté directement à l'extérieur en conditions normales.
f) Une bonne ventilation des compartiments au sol, sans alimentation d'air provenant de groupes de conditionnement d'air de l'avion ou extérieurs à celui-ci.

## Revendications

1. Système pour la ventilation d'un aéronef (1), dont l'intérieur est subdivisé en une pluralité de compartiments (3 à 8, 12 à 16) disposés de part et d'autre d'un plancher longitudinal (9), ledit système comportant des moyens (17) d'alimentation en air neuf, des moyens (18, 19) d'extraction de l'air vicié et des moyens (40) de circulation d'air à l'intérieur dudit aéronef comprenant des ventilateurs de soufflage et d'aspiration d'air associés à un réseau de gaines de soufflage et d'aspiration entre lesdits compartiments, des communications (22, 30, 34, 38) étant prévues entre aux moins certains desdits compartiments qui sont voisins,
caractérisé en ce que :
- lesdits moyens de circulation d'air sont constitués par un ensemble de soufflage et de ventilation (40) comportant un ventilateur de soufflage (41) et un ventilateur d'aspiration (42), montés sur un arbre commun (43) et entraînés par un moteur électrique commun (44) ;
- ledit ensemble de soufflage et de ventilation (40) est disposé dans un compartiment (7,8) se trouvant sous ledit plancher (9) ;
- ledit ventilateur électrique de soufflage (41) aspire l'air ambiant dans un compartiment (7, 8) se trouvant sous ledit plancher (9) ;
- un mélangeur d'air unique (47) reçoit de l'air neuf desdits moyens d'alimentation (17) et de l'air intérieur dudit ventilateur de soufflage (41) et distribue l'air mélangé au moins dans certains desdits compartiments (3 à 6) disposés au-dessus dudit plancher (9) ; et
- l'entrée (56) dudit ventilateur électrique d'aspiration (42) est reliée à au moins certains desdits compartiments (12, 13, 14, 15, 16, 23) et la sortie (58) dudit ventilateur d'aspiration (42) débouche (en 60) au voisinage d'une vanne d'extraction d'air (18) permettant de contrôler la pression dans ledit aéronef.

2. Système selon la revendication 1,
caractérisé en ce que ledit mélangeur d'air unique (47) est disposé dans un compartiment (7,8) se trouvant sous ledit plancher (9).

3. Système selon l'une des revendications 1 ou 2,
caractérisé en ce que au moins un compartiment (23) reçoit directement l'air provenant dudit ventilateur électrique de soufflage (41), sans passage à travers ledit mélangeur d'air (47).

4. Système selon la revendication 3,
caractérisé en ce qu'il comporte une liaison commandable (62,63) entre lesdits moyens d'alimentation en air neuf (17) et ledit compartiment (23) recevant directement l'air dudit ventilateur de soufflage (41).

5. Système selon l'une des revendications 1 à 4,
caractérisé en ce que la sortie (58) dudit ventilateur électrique d'aspiration (42) est reliée par une liaison commandable (19) à un orifice de grand diamètre (61) traversant le fuselage (2) dudit aéronef.

6. Système selon l'une des revendications 1 à 5,
caractérisé en ce que la sortie (58) dudit ventilateur électrique d'aspiration (42) est reliée par une liaison commandable (19) à un orifice de petit diamètre (64) traversant le fuselage (2) dudit aéronef.

## Patentansprüche

1. System zur Belüftung des Innern eines Luftfahrzeugs (1), dessen Innenraum in eine Vielzahl von Abteilen (3 bis 8, 12 bis 16) aufgeteilt ist, die beiderseits eines Längsbodens (9) angeordnet sind, wobei besagtes System Versorgungsmittel (17) an Frischluft, Abzugsmittel (18, 19) der verbrauchten Luft und Mittel (40) für die Luftumwälzung im Innern des besagten Luftfahrzeugs, welche ihrerseits Blas- und Absauglüfter enthalten, die mit einem Netz von Blas- und Ansaugkanälen zwischen besagten Abteilen verbunden sind, aufweist, wobei Verbindungen (22, 30, 34, 38) wenigstens zwischen einigen der besagten Abteile, die aneinandergrenzen, vorgesehen sind,
dadurch gekennzeichnet, daß
- besagte Luftumwälzungsmittel aus einem Blas- und Belüftungskomplex (40) bestehen, die einen Blaslüfter (40) und einen Ansauglüfter (42) enthalten, welche auf einer gemeinsamen Welle (43) montiert und durch einen gemeinsamen elektrischen Motor (44) angetrieben werden;
- besagter Blas- und Belüftungskomplex (40) sich in einem Abteil (7, 8) unter dem besagten Boden (9) befindet;
- besagter elektrische Blaslüfter (41) die Umluft in einem Abteil (7, 8), das sich unter dem besagten Boden (9) befindet, ansaugt;
- ein einziger Luftmischer (47) von den besagten Versorgungsnitteln (17) Frischluft und von dem besagten Blaslüfter (41) Innenluft erhält und die vermischte Luft wenigstens in einige der besagten Abteile (3 bis 6), die sich oberhalb des besagten Bodens (9) befinden, verteilt;
und
- der Eingang (56) des besagten elektrischen Absauglüfters (42) mit mindestens einigen der besagten Abteile (12, 13, 14, 15, 16, 23) verbunden ist und der Ausgang (58) des besagten Absauglüfters (42) bei (60) in der Nähe eines Luftabzugsventils (18) mündet und somit erlaubt, den Druck in dem besagten Luftfahrzeug zu kontrollieren.

2. System nach dem Anspruch 1,
dadurch gekennzeichnet, daß besagter einziger Mischer (47) in einem Abteil (7, 8), das sich unter dem besagten Boden (9) befindet, angeordnet ist.

3. System nach einem der Ansprüche 1 oder 2,
dadurch gekennzeichnet, daß wenigstens eines der Abteile (23) die Luft, die vom besagten elektrischen Blaslüfter (41) kommt, direkt aufnimmt, ohne daß sie den besagten Mischer (47) durchfließt.

4. System nach dem Anspruch 3,
dadurch gekennzeichnet, daß es eine ansteuerbare Verbindung (62, 63) zwischen den besagten Frischluftversorgungsmittel (17) und dem besagten Abteil (23), das die Luft direkt aus dem besagten Blaslüfter (41) erhält, enthält.

5. System nach einem der Ansprüche 1 bis 4,
dadurch gekennzeichnet, daß der Ausgang (58) des besagten elektrischen Absauglüfters (42) durch eine ansteuerbare Verbindung (19) an eine Öffnung großen Durchmessers (61), welche den Rumpf (2) des besagten Luftfahrzeugs durchquert, angeschloßen ist.

6. System nach einem der Ansprüche 1 bis 5,
dadurch gekennzeichnet, daß der Ausgang (58) des besagten elektrischen Absauglüfters (42) durch eine ansteuerbare Verbindung (19) an eine Öffnung kleinen Durchmessers (64), welche den Rumpf (2) des besagten Luftfahrzeugs durchquert, angeschlossen ist.

## Claims

1. A system for ventilating an aircraft (1), the interior of which is divided into a number of compartments (3 to 8, 12 to 16) disposed on either side of a longitudinal floor (9), the system comprising means (17) for supplying fresh air, means (18, 19) for extracting stale air and means (40) for circulating air inside the aircraft and comprising fans for blowing and sucking air and associated with a network of blowing and suction conduits between the compartments, communications (22, 30, 34, 38) being provided between at least some neighbouring compartments, characterised in that:
the air circulating means consist of a blowing and ventilation assembly (40) comprising a blowing fan (41) and a suction fan (42) mounted on a common shaft (43) and driven by a common electric motor (44);
the blowing and ventilation assembly (40) is disposed in a compartment (7, 8) underneath the floor (9);
the electric blowing fan (41) sucks ambient air into a compartment (7, 8) under the floor (9);
a single air mixer (47) receives fresh air from the supply means (17) and internal air from the blowing fan (41) and distributes the mixed air to at least some of the compartments (3 to 6) disposed above the floor (9), and
the inlet (56) of the electric suction fan (42) is connected to at least some of the compartments (12, 13, 14, 15, 16, 23) and the outlet (58) of the suction fan (42) opens (at 60) near an air extraction valve (18) for monitoring the pressure in the aircraft.

2. A system according to claim 1, characterised in that the single air mixer (47) is disposed in a compartment (7, 8) underneath the floor (9).

3. A system according to claim 1 or 2, characterised in that at least one compartment (23) directly receives air from the electric blowing fan (41) without travelling through the air mixer (47).

4. A system according to claim 3, characterised in that it comprises a controllable connection (62, 63) between the fresh air supply means (17) and the compartment (23) which directly receives air from the blowing fan (41).

5. A system according to any of claims 1 to 4, characterised in that the outlet (58) of the electric suction fan (42) is connected by a controllable connection (19) to a large-diameter orifice (61) extending through the aircraft fuselage (2).

6. A system according to claims 1 to 5, characterised in that the outlet (58) of the electric suction fan (42) is connected by a controllable connection (19) to a small-diameter orifice (64) through the aircraft fuselage (2).
